(19) **Europäisches Patentamt / European Patent Office / Office européen des brevets**

(11) **EP 3 742 135 B1**

(12) **FASCICULE DE BREVET EUROPEEN**

(45) Date de publication et mention de la délivrance du brevet:
**19.01.2022 Bulletin 2022/03**

(21) Numéro de dépôt: **19315037.2**

(22) Date de dépôt: **20.05.2019**

(51) Classification Internationale des Brevets (IPC):
**G01J 3/02** *(2006.01)*   **G01N 21/25** *(2006.01)*
**G01N 21/31** *(2006.01)*   **G01J 3/18** *(2006.01)*
**G01N 21/64** *(2006.01)*   **G01J 3/28** *(2006.01)*

(52) Classification Coopérative des Brevets (CPC):
**G01N 21/6408; G01J 3/0208; G01J 3/021;**
**G01J 3/0229; G01J 3/18; G01J 3/1804;**
**G01J 3/2823; G01N 21/31;** G01J 2003/2826;
G01N 21/255; G01N 2021/317; G01N 2021/6423;
G01N 2201/0675

(54) **IMAGERIE MONO-PIXEL HYPER-SPECTRALE RÉSOLUE EN TEMPS**

HYPERSPEKTRALE MONOPIXEL-BILDGEBUNG MIT ZEITLICHER AUFLÖSUNG

HYPERSPECTRAL TIME-RESOLVED MONO-PIXEL IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**25.11.2020 Bulletin 2020/48**

(73) Titulaires:
- **Centre National de la Recherche Scientifique**
  **75016 Paris (FR)**
- **Institut Photovoltaique D'Ile de France (IPVF)**
  **92160 Antony (FR)**
- **Ecole Polytechnique**
  **91120 Palaiseau (FR)**
- **TOTAL SE**
  **92400 Courbevoie (FR)**
- **EDF**
  **75008 Paris (FR)**

(72) Inventeurs:
- **Lombez, Laurent**
  **92000 Nanterre (FR)**

- **Bercegol, Adrien**
  **31000 Toulouse (FR)**
- **Ory, Daniel**
  **92260 Fontenay-aux-Roses (FR)**

(74) Mandataire: **Marks & Clerk France**
**Immeuble "Visium"**
**22, avenue Aristide Briand**
**94117 Arcueil Cedex (FR)**

(56) Documents cités:
**GB-A- 2 231 958     US-A1- 2018 224 552**

- **ROUSSET F ET AL: "Time-resolved multispectral imaging based on an adaptive single-pixel camera", OPTICS EXPRESS, vol. 26, no. 8, 11 avril 2018 (2018-04-11) , page 10550, XP055656742, DOI: 10.1364/OE.26.010550**

EP 3 742 135 B1

## Description

### Domaine technique :

La présente invention porte sur un système d'imagerie adapté pour réaliser de l'imagerie en 4 dimensions (résolution spatiale 2D, résolution temporelle et résolution spectrale), plus particulièrement de l'imagerie hyperspectrale avec une résolution picoseconde.

### Technique antérieure :

L'imagerie hyper-spectrale résolue en temps possède un grand nombre d'applications dans une multitude de domaines différents allant de la caractérisation de tissus biologiques jusqu'à l'étude de l'environnement. Des techniques optiques comme l'imagerie par fluorescence résolue en temps (ou FLIM pour Fluorescence-lifetime imaging microscopy en anglais) par exemple nécessitent d'acquérir des images d'une surface étendue avec une résolution temporelle sub-nanoseconde. En effet, dans l'imagerie FLIM, le temps de décroissance du phénomène de fluorescence doit être mesuré à l'échelle picoseconde ou nanoseconde afin d'obtenir des cartes de durée de vie de fluorescence. L'imagerie par fluorescence est une des techniques d'imagerie les plus utilisées en biologie et l'étude des matériaux car elle permet d'obtenir des informations sur les variations en pH, température et concentration ionique de l'échantillon étudié.

Au-delà de la résolution temporelle, l'acquisition d'un spectre d'émission de l'échantillon est essentielle pour étudier les propriétés photo-physiques d'un échantillon. Par exemple, les informations spectrales peuvent être utilisées pour différentier certains chromophores au sein même d'un échantillon, lors de l'utilisation d'un marquage biologique.

Il existe actuellement peu de systèmes d'imagerie spectralement et temporellement résolue avec une résolution temporelle allant de la dizaine de picoseconde à la nanoseconde. Il est connu d'utiliser des détecteurs linéaires couplés à un spectromètre et un système de comptage de photons uniques corrélé en temps (Time Correlated Single Photon Counting ou TCSPC en anglais). Afin de construire une image il est cependant nécessaire de scanner ou balayer l'échantillon. Comme tenu du nombre de canaux en longueurs d'onde du spectromètre, cette technique ne permet que de réaliser de l'imagerie multispectrale et non pas hyperspectrale.

Pour clarification, on considère ici qu'un système d'imagerie est hyper-spectral lorsqu'il permet d'observer plus de 20 longueurs d'ondes distinctes.

Il est connu de réaliser de simples images 2D avec une résolution temporelle nanoseconde à l'aide de caméras CCD intensifiées utilisant un *gating* électronique permettant d'obtenir une vitesse d'obturation rapide. Leur résolution temporelle est limitée par le temps de réponse intrinsèque de l'instrumentation. De plus, le temps de lecture de la caméra limite l'échantillonnage temporel. L'information spectrale peut être alors obtenue par des mesures séquentielles à différentes longueurs d'onde d'émission. De même, des barrettes de diodes à avalanche déclenchées par photon unique permettent d'obtenir une résolution temporelle d'environ 50 picosecondes. Cependant elles possèdent une résolution spatiale limitée tenant du faible nombre de pixels (~32×32 pixels), un faible facteur de remplissage (~5%) et un temps de lecture élevé.

Il n'existe donc pas de système d'imagerie satisfaisant permettant de réaliser de l'imagerie hyperspectrale résolue en temps avec une résolution temporelle picoseconde pour observer des évènements répétables.

Pour résoudre une partie des problèmes de l'art antérieur l'invention a pour objet un système d'imagerie hyper-spectrale résolue en temps d'un évènement répétable avec une résolution picoseconde utilisant l'imagerie mono-pixel combiné avec un système dispersif et une caméra streak ou à balayage de fente.

L'imagerie mono-pixel (SP pour single pixel en anglais) est une technique qui produit des images en éclairant une scène avec un éclairage structuré par application successive de divers motifs spatiaux et en mesurant l'intensité lumineuse totale réfléchie ou transmise par la scène en correspondance de chaque motif spatial. En variante, il est possible de ne pas utiliser un éclairage structuré, mais de moduler spatialement, au moyen de ces mêmes motifs spatiaux, la lumière réfléchie ou transmise par la scène.. L'imagerie mono-pixel utilise un modulateur spatial de lumière (SLM) - afin de générer les motifs SLM - combiné avec un détecteur sans résolution spatiale. Cette méthode consiste essentiellement en la mesure du produit scalaire de la scène et d'une séquence de motifs SLM. A l'aide de méthodes de post-traitement des données acquises, il est possible de reconstruire une image de la scène. Les stratégies de reconstructions de la scène sont par exemple des techniques d'acquisition comprimée, des scans de base ou des scans de base adaptative. Les techniques d'acquisition comprimée permettent théoriquement d'obtenir une meilleure résolution de reconstruction mais nécessitent cependant un temps de calcul élevé. Les scans sur une base prédéterminée (Hadamard, Fourier, ondelette, transformée en cosinus discrète) permettent une reconstruction de l'image par transformation inverse rapide mais nécessite un grand nombre de motifs SLM et donc un long temps d'acquisition. Tout comme les scans de base, les scans de base adaptative permettent une reconstruction rapide de l'image, et diminuent le temps d'acquisition nécessaire en ne sélectionnant que les motifs SLM qui contiennent le plus d'information.

Cette technique d'imagerie permet des reconstructions d'images avec une bonne résolution spatiale. De plus, elle est particulièrement adaptée à l'imagerie résolue en temps en l'associant avec une caméra à balayage de fente permettant de dépasser la limitation intrinsèque du temps de lecture des caméras CCD (voir par exemple Liang, Jinyang, et al. "Encrypted three-dimensional dynamic imaging using snapshot time-of-flight compressed ultrafast photography." Scientific reports 5 (2015): 15504.). Elle permet d'obtenir d'imager des phénomènes transitoires avec des résolutions de l'ordre de la dizaine de picosecondes (voir par exemple Gao, Liang, et al. "Single-shot compressed ultrafast photography at one hundred billion frames per second." Nature 516.7529 (2014): 74., ou US 2018/0224552 A1).

En utilisant un spectromètre couplé à un système TCSPC et un montage d'imagerie SP il est également possible de réaliser de l'imagerie SP multispectrale résolue en temps avec une résolution sub-nanoseconde (voir Rousset, Florian, et al. "Time-resolved multispectral imaging based on an adaptive single-pixel camera." Optics express 26.8 (2018): 10550-10558). GB 2 231 958 A décrit la combinaison d'un spectroscope et d'une caméra à balayage de fente (caméra streak). Une caméra CCD - visualisant un écran fluorescent de la caméra streak - obtient l'évolution temporelle et la distribution des longueurs d'onde de la fluorescence d'un point sur un spécimen.

**Cependant actuellement, aucun dispositif** d'imagerie SP ne permet de réaliser de l'imagerie hyper-spectrale avec une résolution temporelle picoseconde.

De par la répétition nécessaire des mesures avec différents motifs SLM afin de reconstruire une image de la scène, il est clair que l'imagerie SP est particulièrement adaptée à l'observation de phénomènes ou d'événements lumineux répétables. Ainsi l'imagerie FLIM est un candidat idéal pour l'imagerie SP à condition d'obtenir une résolution temporelle suffisamment bonne.

De plus, comme mentionné précédemment, obtenir une résolution spectrale est primordial pour déterminer certains paramètres critiques de l'échantillon étudié.

Aussi le système d'imagerie hyper-spectrale résolue en temps avec une résolution picoseconde de l'invention utilise l'imagerie mono-pixel combiné avec un système dispersif pour obtenir une résolution spectrale et une caméra à balayage de fente pour obtenir une résolution temporelle.

Comparativement à un système de microscopie confocale auquel on aurait ajouté une caméra à balayage de fente pour obtenir une résolution temporelle, le système d'imagerie SP associé à une caméra à balayage de fente de l'invention permet d'utiliser la totalité du rayonnement émis par l'échantillon.

## Résumé de l'invention :

Ainsi, un objet de l'invention est un système d'imagerie hyper-spectrale résolu en temps d'un échantillon comprenant : une source de rayonnement adaptée pour illuminer l'échantillon de manière répétable, un modulateur spatial de lumière adapté pour former un masque de transmission ou de réflexion **P**, un premier système optique configuré pour former une image *I* de

l'échantillon sur le modulateur spatial de lumière un processeur relié au modulateur spatial de lumière et configuré pour faire varier le masque de transmission ou de réflexion **P** pour chaque répétition de l'illumination, un deuxième système optique adapté pour focaliser le rayonnement transmis ou réfléchi par le modulateur spatial de lumière de manière à former, dans son plan focal image, une image partielle **S=P.I;** un dispositif dispersif comprenant une fente placée dans le plan focal image du deuxième système optique, ledit dispositif dispersif étant adapté pour séparer spatialement les différentes longueurs d'onde du rayonnement transmis ou réfléchi par le modulateur spatial de lumière ; ledit système d'imagerie étant caractérisé en ce qu'il comprend:

une caméra à balayage de fente agencée de manière à être illuminée par le rayonnement issu du dispositif dispersif et configurée pour acquérir une pluralité d'images partielles résolues en temps et en longueur d'onde de l'échantillon associées à des masques de transmission ou de réflexion respectifs et différents, ladite caméra à balayage de fente étant reliée au processeur et ledit processeur étant également configuré pour combiner lesdites images partielles de l'échantillon de manière à construire un cube image 4D formant une image résolue en temps et en longueur d'onde de l'échantillon.

Selon des modes particuliers de l'invention :

le système d'imagerie comprend un troisième système optique adapté pour focaliser le rayonnement provenant de la source de rayonnement sur l'échantillon et pour collecter le rayonnement issu de l'échantillon, ledit système d'imagerie comprenant par ailleurs un séparateur de faisceau agencé de manière à séparer le rayonnement provenant de l'échantillon et le rayonnement provenant de la source de rayonnement ;

le système d'imagerie comprend une plateforme de translation adapté pour déplacer l'échantillon selon l'axe optique du troisième système optique ;

le dispositif dispersif comprend un réseau de diffraction ;

la caméra à balayage de fente et le système dispersif sont adaptés pour acquérir simultanément des images partielles avec plus de 20 canaux de longueurs d'onde différentes ;

la source de rayonnement est reliée au processeur de manière à ce que la répétition de l'illumination émise par la source de rayonnement soit synchronisée avec le changement du masque de transmission ou de réflexion du modulateur spatial de lumière ;

le modulateur spatial de lumière est une matrice de micro-miroirs, formant un masque d'intensité binaire en réflexion ;

le processeur est configuré pour que les masques de réflexion binaires de la matrice de micro-miroirs associés aux images partielles de l'échantillon combinées pour former l'image résolue en temps et en longueur d'onde de l'échantillon forment une base de Hadamard, de Fourier ou d'ondelettes ;

le processeur est configuré pour combiner lesdites images partielles de l'échantillon de manière à construire un cube 4D formant une image résolue en temps et en longueur d'onde de l'échantillon en mettant en oeuvre un algorithme *matching pursuit* ou *basis pursuit ;*

la source de rayonnement est une source impulsionnelle ;

la source de rayonnement est une source laser, par exemple une diode laser ;

L'invention a aussi pour objet un procédé d'imagerie hyper-spectrale résolu en temps d'un échantillon comprenant les étapes suivantes :

a. illuminer l'échantillon avec une source de rayonnement

b. former l'image de l'échantillon avec un premier système optique sur un modulateur spatial de lumière formant un masque de transmission ou de réflexion P;

c. focaliser le rayonnement transmis ou réfléchi par le modulateur spatial de lumière à l'aide d'un deuxième système optique sur un dispositif dispersif, et séparer spatialement les différentes longueurs d'onde du rayonnement transmis ou réfléchi par le modulateur spatial de lumière à l'aide dudit dispositif dispersif ;

d. acquérir, à l'aide d'une caméra à balayage de fente agencée de manière à être illuminée par le rayonnement issu du dispositif dispersif, une image partielle *S=P.I;* résolue en temps et en longueur d'onde de l'échantillon associée à un masque de transmission ou de réflexion *P* ;

e. répéter les étapes a) à c) en variant le masque de transmission ou de réflexion binaire *P* du modulateur spatial de lumière à l'aide d'un processeur relié au modulateur spatial de lumière afin d'acquérir, avec la caméra à balayage de fente, une pluralité d'images partielles résolues en temps de l'échantillon associées à des masques de transmission ou de réflexion *P* respectifs ;

f. combiner, à l'aide d'un processeur relié à la caméra à balayage de fente, lesdites images partielles résolues en temps de l'échantillon respectifs de manière à construire un cube 4D formant une image résolue en temps et en longueur d'onde de l'échantillon

## Brève description des figures :

D'autres caractéristiques, détails et avantages de l'invention ressortiront à la lecture de la description faite en référence aux dessins annexés donnés à titre d'exemple et qui représentent, respectivement :

[Figure 1], une vue schématique d'un système d'imagerie hyper-spectrale résolu en temps d'un échantillon selon un premier mode de réalisation de l'invention.

[Figure 2], une vue schématique du dispositif dispersif et de la caméra à balayage de fente du système d'imagerie de la figure 1.

[Figure 3], une vue schématique d'un système d'imagerie hyper-spectrale résolu en temps d'un échantillon selon un second mode de réalisation de l'invention.

[Figure 4A] une image intégrée en longueur d'onde et en temps d'un signal d'intensité de photoluminescence d'une source ponctuelle, et [Figure 4B] une image de l'évolution résolue en temps et résolue en longueur d'onde de signal de photoluminescence du pixel le plus intense de la figure 4A.

Par la suite, lorsque des mêmes références sont utilisées dans des figures, elles désignent les mêmes éléments.

## Description détaillée :

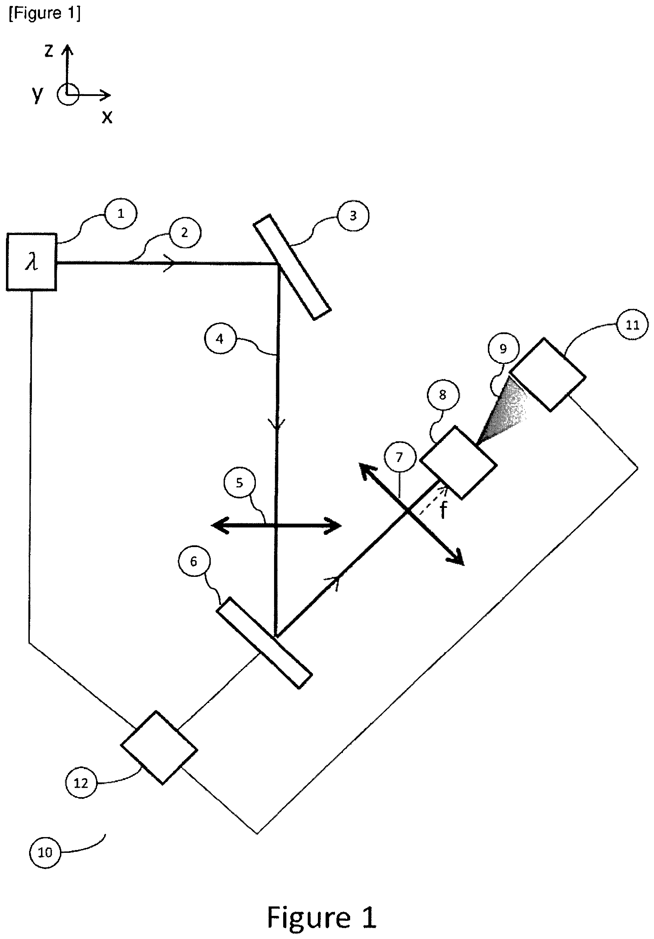

La figure 1 illustre une vue schématique d'un système d'imagerie 10 hyperspectrale résolue en temps d'un événement répétable selon un premier mode de réalisation de l'invention. Le système comprend une source de rayonnement 1. Dans le mode de réalisation de la figure 1 cette source est une source de rayonnement monochromatique impulsionnelle comme un laser solide. La source laser est reliée à un processeur configuré pour contrôler la synchronisation de l'impulsion laser avec le reste du système. Dans un autre mode de réalisation, la source de rayonnement est à onde continue modulée en intensité. Dans un autre mode de réalisation la source de rayonnement peut être une lampe à vapeur.

Le rayonnement 2 généré par la source 1 illumine un échantillon 3. Cet échantillon peut absorber le rayonnement incident 2 et émettre un signal de photoluminescence 4 ou tout simplement réfléchir ou transmettre une partie du rayonnement incident 2. Dans le mode de réalisation de la figure 1, l'échantillon émet un signal ou rayonnement de photoluminescence 4 polychromatiqùe après avoir absorbé une partie du rayonnement incident 2.

Par la suite on considère que l'événement que l'on souhaite résoudre temporellement et spectralement est un événement répétable en déclenchant à nouveau ce phénomène avec une nouvelle impulsion laser par exemple.

Par la suite on considère que les termes rayonnement émis par l'échantillon, rayonnement transmis par l'échantillon, rayonnement réfléchi par l'échantillon sont équivalents.

Le rayonnement émis par l'échantillon 4 est focalisé par un premier système optique 4 sur un modulateur spatial de lumière (SLM) 6, situé dans le plan focal image du système optique. Ce système optique 4 est un objectif optique. De manière préférentielle il possède une grande ouverture numérique. Il peut être une simple lentille, par exemple une lentille biconvexe convergente ou un ensemble complexe convergent de lentilles. Le système optique forme donc une image **I** de l'échantillon 3 dans son plan focal image.

Le SLM est configuré pour former un masque de réflexion ou de transmission binaire d'intensité **P.** Dans le mode de réalisation de la figure 1, ce SLM 6 est une matrice de micro-miroirs (DMD).

A titre d'exemple, le DMD du système d'imagerie 10 est constitué de 1024x768 micro-miroirs accolés, chaque miroir faisant environ $13\mu m$ de côté. Les miroirs sont contrôlables de manière électrostatique et peuvent s'incliner (état « 1 ») ou non (état « 0 ») d'un angle fixe par rapport à la normale du DMD, en général d'un angle de 12°, le rayonnement réfléchi par les miroirs dans l'état 1 formant un angle de 24° avec le rayonnement incident 4.

Les miroirs dans l'état 1 étant couplés au reste du montage optique, ils ont un coefficient de réflexion égal à 1, les miroirs dans l'état 0 correspondant à un coefficient de réflexion nul. Ainsi, le DMD constitue un masque binaire d'intensité contrôlable.

L'inclinaison des micro-miroirs et donc le motif du masque binaire **P** du DMD est contrôlable par un processeur 12 relié au DMD.

Dans un autre mode de réalisation le SLM est un dispositif basé sur des cristaux liquides pouvant fonctionner en transmission ou en réflexion et formant un masque binaire d'intensité **P.**

Le système d'imagerie 10 comprend un second système optique 7 de longueur focale f, adapté pour focaliser le rayonnement transmis ou réfléchi par le modulateur spatial de lumière de manière à former, dans son plan focal image, une image partielle de l'échantillon **S=P.I.**

Dans le plan focal image du second système optique, le système d'imagerie 10 comprend un dispositif dispersif 8 permettant de séparer spatialement les différentes longueurs d'onde du rayonnement et ainsi obtenir une résolution spectrale. Ce dispositif dispersif est couplé à une caméra à balayage de fente 11 permettant d'obtenir une résolution temporelle.

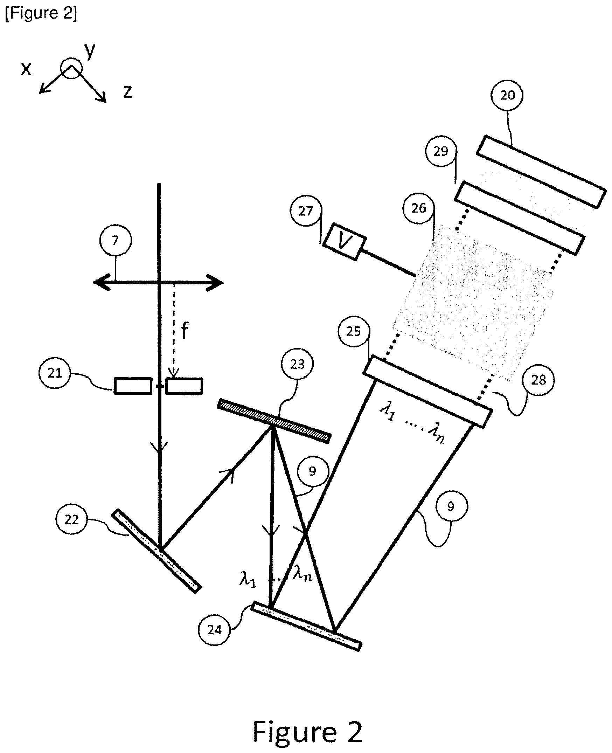

Dans le mode de réalisation de la figure 1, ce système dispersif est composé d'une fente placée dans le plan focal image du second système optique, d'une pluralité de miroirs et d'un réseau de diffraction agencés de manière à séparer spatialement les différentes longueurs d'onde du rayonnement selon un plan xz déterminé. La direction z étant l'axe optique du premier système optique. Ainsi, en sortie du système dispersif, chaque longueur d'onde du rayonnement 9 se propage simultanément suivant une direction différente située dans le plan xz. Une vue schématique du dispositif dispersif 8 et de la caméra à balayage de fente 11 est illustrée en figure 2.

La fente 21, la direction de la fente étant selon la direction y, est placée dans le plan focal du second système optique 7 agit comme un filtre spatial et permet de nettoyer le faisceau en éliminant la diffusion du rayonnement émis par la source 1. Un premier miroir de collimation 22 permet de diriger le rayonnement vers un réseau de diffraction en réflexion 23. Le réseau de diffraction permet de séparer spatialement les différentes longueurs d'onde du rayonnement dans le rayonnement réfléchi 9, chaque longueur d'onde possédant une direction de propagation différente située dans le même plan horizontal xz. Un deuxième miroir 24 permet de diriger le rayonnement vers la caméra à balayage de fente 11.

Comme illustré dans la figure 2, la caméra à balayage de fente comprend une photocathode 25. Le rayonnement 9 en entrée de la photocathode produit des électrons par effet photoélectrique qui sont accélérés par un champ électrique généré entre deux plaques de déviation 26 reliées à un générateur de tension 27. Les électrons sont déviés verticalement selon une direction y parallèle à la normale des plaques de déviation sous un champ électrique variable. En modulant la différence de tension entre les plaques 26, le champ électrique varie rapidement donnant ainsi une déviation des électrons qui varie au cours du temps. Plus le temps d'arrivé des électrons entre les plaques de déviation est tardif, plus le champ électrique est important produisant ainsi un déplacement vertical plus important. La déviation des électrons est imagée à l'aide d'une galette de microcanaux (ou MCP en anglais) permettant de multiplier le nombre d'électrons déviés et un écran de phosphore 29. Les impacts des électrons sur l'écran de phosphore sont observés à l'aide d'un capteur bidimensionnel 20, par exemple de type CCD.

Le générateur de tension 27 est relié au processeur afin de synchroniser la variation du champ électrique entre les plaques de déviations de la caméra à balayage de fente avec l'impulsion laser émise par la source de rayonnement laser 1.

L'axe vertical de la caméra CCD permet donc de résoudre temporellement la dynamique de l'image partielle S de l'échantillon associée au masque de réflexion binaire **P** et l'axe horizontal permet une séparation en longueur d'onde de l'image partielle et donc une visualisation hyperspectrale de l'échantillon ou de l'évènement lumineux.

La résolution temporelle est fixée par le capteur CCD et la fréquence de balayage de la tension de la caméra à balayage de fente, elle est typiquement de l'ordre de la picoseconde avec une fréquence de balayage fixe et d'environ 15 picosecondes avec une fréquence de balayage variable. Il faut noter que lorsque la durée de l'impulsion laser est plus grande que la résolution temporelle de la caméra à balayage de fente, alors c'est elle qui fixe la résolution temporelle du système d'imagerie.

La résolution spectrale est fixée par le réseau de diffraction, à condition que la taille de pixel de la caméra CCD soit inférieure à la résolution minimale en longueur d'onde du réseau de diffraction.

Le nombre de canaux de temporel T détectables par le système d'imagerie 10 est fixé par la dimension verticale du capteur CCD. Le nombre de canaux de longueurs d'onde détectables simultanément $\Lambda$ par le système d'imagerie 10 est fixé par la dimension horizontale du capteur CCD. En choisissant le capteur de manière approprié, il est donc possible de réaliser de l'imagerie hyper-spectrale, c'est-à-dire imager simultanément 20 ou plus canaux de longueurs d'onde du rayonnement de photoluminescence issu de l'échantillon.

Comme expliqué brièvement précédemment, la reconstruction complète de l'image de l'événement répétable ou de l'échantillon requiert d'effectuer une pluralité M de mesures afin d'acquérir, avec la caméra à balayage de fente 11, une pluralité M d'images **S$_1$, ..., S$_M$** partielles associées à des masques de transmission ou de réflexion binaire **P$_1$, ..., P$_M$** respectifs distincts du même événement ou de l'échantillon. Les images partielles **S$_1$, ..., S$_M$** sont obtenues en illuminant l'échantillon avec une nouvelle impulsion lumineuse émise par la source de rayonnement 1, en changeant le masque binaire **P** du DMD entre chaque impulsion à l'aide du processeur et en réalisant une nouvelle acquisition avec la caméra à balayage de fente. Comme mentionné précédemment, la source de rayonnement, le DMD et la caméra à balayage de fente étant tous reliés au processeur, celui-ci est configuré pour synchroniser de manière appropriée l'impulsion lumineuse, le changement de masque binaire du DMD et l'acquisition par la caméra à balayage de fente.

Lorsqu'un nombre suffisant d'images partielles associées à des motifs binaires distincts est acquis, il est possible de reconstruire une image complète $I_{tot}$ de l'échantillon par post-traitement. L'image reconstruite est un cube image 4D **I**$(x,y,\lambda,t)$, avec $(x,y)$ les coordonnées spatiales de l'image, $\lambda$ la longueur d'onde, t le temps. On définit le cube image $\boldsymbol{I_{tot}} \in \mathbb{R}^{N \times N \times \Lambda T}$ faisant $N \times N$ pixels, $T$ étant le nombre de canaux temporel détectés avec la caméra à balayage de fente et A étant le nombre de canaux en longueur d'onde détectés avec la caméra à balayage de fente, avec $\boldsymbol{I_{tot}} = (I_{1,1}, ..., I_{\lambda,t}, ..., I_{\lambda,T})$, $I_{\lambda,t} \in \mathbb{R}^{N \times N}$ l'image reconstruite correspondant au $\lambda$-ième canal spectral et au t-ième canal temporel mesuré. On note $\boldsymbol{S_m} \in \mathbb{R}^{1 \times \Lambda T}$ le signal ou image partielle mesuré par le m-ième motif binaire. Les motifs binaires **P$_1$, ..., P$_M$** associés aux M mesures donnant des images partielles **S$_1$, ..., S$_M$** de l'échantillon forment une matrice $\boldsymbol{P_{tot} = (P_1; ...; P_M)}$ avec $\boldsymbol{P_{tot}} \in \mathbb{R}^{M \times N \times N}$. En appelant $\boldsymbol{S_{tot} = (S_1; ...; S_M)}$, $\boldsymbol{S_{tot}} \in \mathbb{R}^{M \times \Lambda T}$ on a alors :

[Math. 1]

$$S_{tot} = P_{tot} \cdot I_{tot}.$$

Dans le mode de réalisation, le processeur 12 est configuré pour réaliser cette étape de post-traitement et combiner les images partielles de l'échantillon de manière à construire le cube image 4D $\boldsymbol{I_{tot}}$ formant une image résolue en temps et en longueur d'onde de l'échantillon, c'est-à-dire inverser l'équation [Math. 1].

Plusieurs méthodes de reconstructions d'image adaptée à l'imagerie SP sont connues et peuvent être appliquées à l'invention. Voir par exemple : Duarte, Marco F., et al. "Single-pixel imaging via compressive sampling." IEEE signal processing magazine 25.2 (2008): 83-91, ou encore, Edgar, Matthew P., Graham M. Gibson, and Miles J. Padgett. "Principles and prospects for single-pixel imaging." Nature Photonics (2018): 1..

Dans le mode de réalisation de la figure 1, les motifs binaires **P$_1$, ..., P$_M$** associés aux M mesures donnant des images partielles **S$_1$, ..., S$_M$** de l'échantillon combinées pour former l'image complète $\boldsymbol{I_{tot}} = (I_{1,1}, ..., I_{\lambda,t}, ..., I_{\lambda,T})$, résolue en temps et en longueur d'onde sont avantageusement choisis de manière à former une base de Hadamard, de Fourier ou d'ondelette. Le processeur est alors configuré pour que le balayage de l'échantillon par les motifs binaires soient effectués sur une base prédéterminée ou sur une base adaptative. L'avantage d'effectuer un balayage sur une base adaptative étant qu'il diminue le temps d'acquisition nécessaire en ne sélectionnant que les motifs binaires qui contiennent le plus d'information spatiale. Dans le cas d'un balayage sur base adaptative, le processeur est configuré pour extraire des informations spatiales de l'échantillon lors de l'acquisition d'images partielles afin de déterminer quels motifs binaires sont le plus adaptés pour représenter l'échantillon. L'image complète étant alors reconstruite à l'aide du processeur par une transformation inverse appropriée. Ces méthodes possèdent l'avantage d'une reconstruction rapide de l'image par algorithme à l'aide d'une transformée inverse appropriée mais nécessitent en général un nombre de motifs important et donc un temps d'acquisition long.

Dans un autre mode de réalisation, le processeur peut être configuré pour que les motifs binaires associés aux images partielles soient pseudo-aléatoires, le processeur étant adapté pour reconstruire l'image complète résolue en temps en mettant en œuvre un algorithme d'acquisition comprimée ($l_1$-minimisation) comme la poursuite de base (*matching pursuit*) ou *basis pursuit*. Ces méthodes possèdent l'avantage de permettre une reconstruction avec un nombre de motifs moins important qu'avec les méthodes de balayage sur base prédéterminée ou base adaptative et donc nécessitent un temps d'acquisition plus faible. Cependant elles nécessitent une puissance de calcul plus élevée et un temps de calcul conséquent.

Il est également possible de suivre un point d'intérêt donné de l'échantillon avec des motifs binaires pseudo aléatoires adaptatifs. Cela peut être utile dans la caractérisation de cellules photovoltaïques par exemple, où la source d'illumination photoluminescente (PL) est ponctuelle et peut être considérée comme symétrique radialement. L'usage d'une base radiale de motifs binaire permet ainsi de diminuer le nombre d'acquisitions effectuées. La détermination du centre d'une source PL dans l'échantillon est réalisée en observant l'évolution de l'intensité acquise par la caméra à balayage de fente en intégrant une image selon la longueur d'onde et le temps et en activant tour à tour des zones différentes du DMD en adoptant un système de dichotomie .

Ainsi, lorsque l'échantillon a des propriétés particulières (centro-symétrique, une norme de variation totale faible...) il est nécessaire d'effectuer environ $M$ = N × log(N) mesures avec des motifs binaires distincts $P_1$,...,$P_M$ avec

$$P_i \in \mathbb{R}^{N \times N}$$

pour reconstruire une image de NxN pixels, la taille de pixel étant fixée par le DMD. Sinon, il est en général nécessaire d'effectuer NxN mesures.

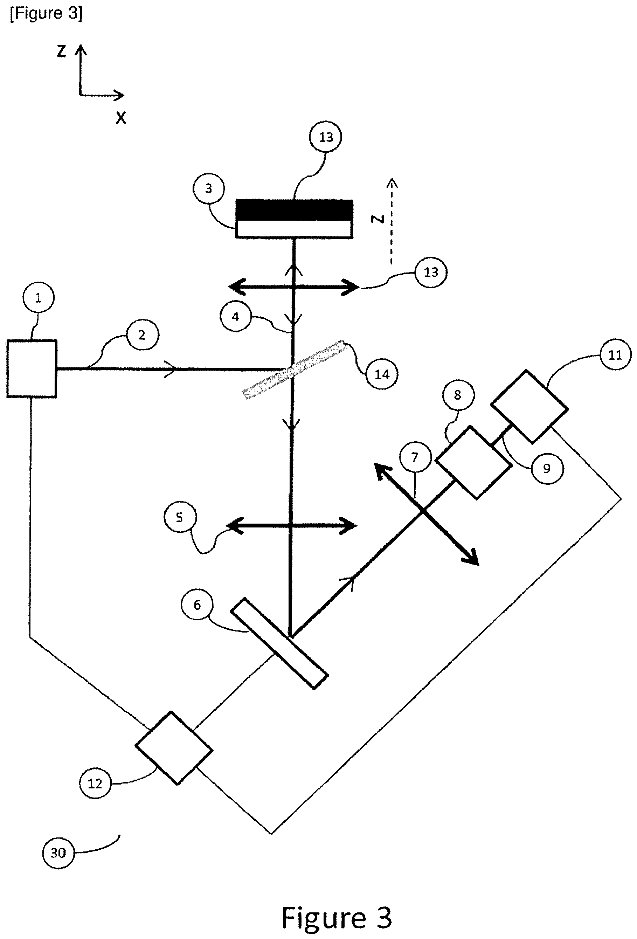

La figure 3 illustre un système d'imagerie 30 selon un second mode de réalisation de l'invention similaire à celui de la figure 1, à l'exception qu'il comporte un séparateur de faisceau 14 agencé de manière à séparer le rayonnement provenant de l'échantillon et le rayonnement provenant de la source de rayonnement. Le séparateur de faisceau peut être une lame séparatrice.

Le système d'imagerie 30 comprend de plus un troisième système optique 13 adapté pour focaliser le rayonnement provenant de la source de rayonnement sur l'échantillon, l'échantillon étant placé dans le plan focal du système troisième optique. Afin de facilement contrôler la position de l'échantillon dans le plan focal du troisième système optique, l'échantillon est fixé sur une platine de translation adaptée pour déplacer l'échantillon selon l'axe optique du troisième système optique (représenté par la direction z dans la figure 3). Le troisième système optique est un système optique objectif similaire à ceux utilisés en microscopie confocale par exemple. Dans le mode de réalisation de la figure 3, il possède une grande ouverture numérique. Il peut être une simple lentille, par exemple une lentille biconvexe convergente ou un ensemble complexe convergent de plusieurs lentilles.

Comparativement au système d'imagerie du mode de réalisation de la figure 1, le système d'imagerie du mode de réalisation de la figure 3 permet de collecter une plus grande partie du flux lumineux émis/transmis/réfléchi par l'échantillon.

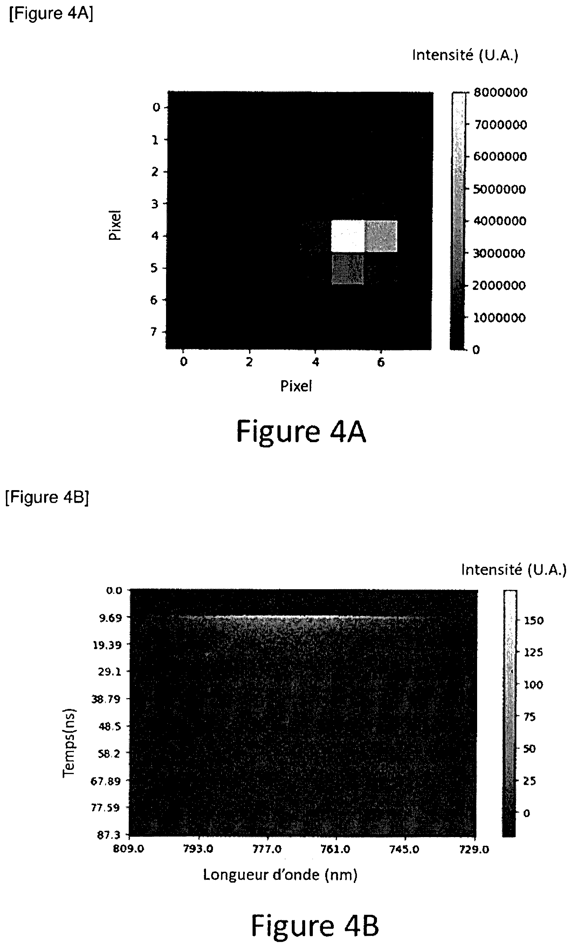

La figure 4A illustre une image d'un signal PL provenant d'une source ponctuelle acquise avec le système d'imagerie du mode de réalisation de la figure 3 et intégrée en longueur d'onde et en temps. En déterminant le centre de la source ponctuelle et en scannant autour de ce point, une image 4D de la source ponctuelle peut être reconstruite. Pour faciliter la visualisation, la figure 4A présente l'image de la source ponctuelle reconstruite et intégrée en longueur d'onde et en temps. La figure 4B présente l'évolution du signal PL en fonction du temps et en fonction de la longueur d'onde du pixel le plus intense de la figure 4A. Ce pixel correspond au centre de la source ponctuelle. En réalisant des coupes horizontales de la figure 4B pour différentes valeurs de temps, il est possible d'observer l'évolution du spectre dans le temps du signal du pixel central.

Dans un autre mode de réalisation le SLM est configuré pour former masque de réflexion ou de transmission non binaire d'intensité. Un masque non binaire permet d'accélérer l'étape de reconstruction de l'image de l'échantillon. Alternativement, le masque peut être un masque de phase.

## Revendications

1. Système d'imagerie (10, 30) hyper-spectrale résolu en temps d'un échantillon (3) comprenant : une source de rayonnement adaptée pour illuminer l'échantillon de manière répétable, un modulateur spatial de lumière (6) adapté pour former un masque de transmission ou de réflexion *P,* un premier système optique (5) configuré pour former une image *I* de l'échantillon sur le modulateur spatial de lumière (6), un processeur (12) relié au modulateur spatial de lumière et configuré pour faire varier le masque de transmission ou de réflexion **P** pour chaque répétition de l'illumination, un deuxième système optique (7) adapté pour focaliser le rayonnement transmis ou réfléchi par le modulateur spatial de lumière de manière à former, dans son plan focal image, une image partielle ***S=P.I;*** un dispositif dispersif (8) comprenant une fente placée dans le plan focal image du deuxième système optique, ledit dispositif dispersif étant adapté pour séparer spatialement les différentes longueurs d'onde du rayonnement transmis ou réfléchi par le modulateur spatial de lumière ; ledit système d'imagerie étant **caractérisé en ce qu'**il comprend:
une caméra à balayage de fente agencée de manière à être illuminée par le rayonnement issu du dispositif dispersif (9) et configurée pour acquérir une pluralité d'images partielles résolues en temps et en longueur d'onde de l'échantillon associées à des masques de transmission ou de réflexion ***P*** respectifs et différents, ladite caméra à balayage de fente étant reliée au processeur (12) et ledit processeur étant également configuré pour combiner lesdites images partielles de l'échantillon de manière à construire un cube image ***I_{tot}*** 4D formant une image résolue en temps et en longueur d'onde de l'échantillon.

2. Système d'imagerie (30) selon la revendication précédente, comprenant un troisième système optique (13) adapté pour focaliser le rayonnement (2) provenant de la source de rayonnement sur l'échantillon et pour collecter le rayonnement issu de l'échantillon (4), ledit système d'imagerie comprenant par ailleurs un séparateur de faisceau (14) agencé de manière à séparer le rayonnement provenant de l'échantillon (4) et le rayonnement provenant de la source de rayonnement (1).

3. Système d'imagerie (30) selon la revendication 2, comprenant une plateforme de translation (13) adapté pour déplacer l'échantillon selon l'axe optique du troisième système optique.

4. Système d'imagerie selon l'une quelconque des revendications précédentes, dans lequel le dispositif dispersif (8) comprend un réseau de diffraction (23).

5. Système d'imagerie selon l'une quelconque des revendications précédentes, dans lequel la caméra à balayage de fente (11) et le système dispersif (8) sont adaptés pour acquérir simultanément des images partielles avec plus de 20 canaux de longueurs d'onde différentes.

6. Système d'imagerie selon l'une quelconque des revendications précédentes, dans lequel la source de rayonnement (1) est reliée au processeur (12) de manière à ce que la répétition de l'illumination émise par la source de rayonnement soit synchronisée avec le changement du masque de transmission ou de réflexion du modulateur spatial de lumière (6).

7. Système d'imagerie selon l'une quelconque des revendications précédentes, dans lequel le modulateur spatial de lumière est une matrice de micro-miroirs, formant un masque d'intensité binaire en réflexion.

8. Système d'imagerie selon la revendication précédente, dans lequel le processeur est configuré pour que les masques de réflexion binaires de la matrice de micro-miroirs associés aux images partielles de l'échantillon combinées pour former l'image résolue en temps et en longueur d'onde de l'échantillon forment une base de Hadamard, de Fourier ou d'ondelettes.

9. Système d'imagerie selon la revendication précédente, dans lequel le processeur est configuré pour combiner lesdites images partielles de l'échantillon de manière à construire un cube 4D formant une image résolue en temps et en longueur d'onde de l'échantillon en mettant en œuvre un algorithme *matching pursuit* ou *basis pursuit.*

10. Système d'imagerie selon l'une quelconque des revendications précédentes, dans lequel la source de rayonnement est une source impulsionnelle.

11. Système d'imagerie selon l'une quelconque des revendications précédentes, dans lequel la source de rayonnement est une source laser, par exemple une diode laser.

12. Procédé d'imagerie hyper-spectrale résolu en temps d'un échantillon (3) comprenant les étapes suivantes :

   a. illuminer l'échantillon avec une source de rayonnement (1)
   b. former l'image de l'échantillon avec un premier système optique (5) sur un modulateur spatial de lumière (6) formant un masque de transmission ou de réflexion *P;*
   c. focaliser le rayonnement transmis ou réfléchi par le modulateur spatial de lumière à l'aide d'un deuxième système optique (7) sur un dispositif dispersif (8), et séparer spatialement les différentes longueurs d'onde du rayonnement transmis ou réfléchi par le modulateur spatial de lumière à l'aide dudit dispositif dispersif ;
   d. acquérir, à l'aide d'une caméra à balayage de fente agencée de manière à être illuminée par le rayonnement (9) issu du dispositif dispersif, une image partielle *S=P.I;* résolue en temps et en longueur d'onde, de l'échantillon associée à un masque de transmission ou de réflexion *P* ;
   e. répéter les étapes a) à c) en variant le masque de transmission ou de réflexion binaire *P* du modulateur spatial de lumière à l'aide d'un processeur (12) relié au modulateur spatial de lumière afin d'acquérir, avec la caméra à balayage de fente, une pluralité d'images partielles résolues en temps de l'échantillon associées à des masques de transmission ou de réflexion *P* respectifs ;
   f. combiner, à l'aide d'un processeur relié à la caméra à balayage de fente, lesdites images partielles résolues en temps de l'échantillon respectifs de manière à construire un cube $I_{tot}$ 4D formant une image résolue en temps et en longueur d'onde de l'échantillon.

**Patentansprüche**

1. System (10, 30) zur zeitaufgelösten hyperspektralen Abbildung einer Probe (3), das Folgendes umfasst: eine Strahlungsquelle, ausgelegt zum wiederholten Beleuchten der Probe, einen räumlichen Lichtmodulator (6), ausgelegt zum Bilden einer Transmissions- oder Reflexionsmaske *P,* ein erstes optisches System (5), konfiguriert zum Erzeugen eines Bildes *I* der Probe auf dem räumlichen Lichtmodulator (6), einen Prozessor (12), der mit dem räumlichen Lichtmodulator verbunden und zum Variieren der Transmissions- oder Reflexionsmaske *P* bei jeder Wiederholung der Beleuchtung konfiguriert ist, ein zweites optisches System (7), ausgelegt zum Fokussieren der vom räumlichen Lichtmodulator durchgelassenen oder reflektierten Strahlung, um in seiner Bildbrennebene ein Teilbild $S=P.I$ zu bilden;

eine Streuvorrichtung (8) mit einem Schlitz in der Bildbrennebene des zweiten optischen Systems, wobei die Streuvorrichtung zum räumlichen Trennen der verschiedenen Wellenlängen der durch den räumlichen Lichtmodulator durchgelassenen oder reflektierten Strahlung ausgelegt ist;

wobei das Abbildungssystem **dadurch gekennzeichnet ist, dass** es Folgendes umfasst: eine Schmierkamera, so ausgelegt, dass sie von der Strahlung aus der Streuvorrichtung (9) beleuchtet wird, und konfiguriert zum Aufnehmen einer Mehrzahl von zeit- und wellenlängenaufgelösten Teilbildern der Probe, die mit jeweiligen und unterschiedlichen Transmissions- oder Reflexionsmasken $P$ assoziiert sind, wobei die Schmierkamera mit dem Prozessor (12) verbunden ist und wobei der Prozessor auch zum Kombinieren der Teilbilder der Probe konfiguriert ist, um einen 4D-Bildwürfel $I_{tot}$ zu konstruieren, der ein zeit- und wellenlängenaufgelöstes Bild der Probe bildet.

2. Bildgebungssystem (30) nach dem vorhergehenden Anspruch, das ein drittes optisches System (13) umfasst, ausgelegt zum Fokussieren der Strahlung (2) von der Strahlungsquelle auf die Probe und zum Sammeln der Strahlung von der Probe (4), wobei das Bildgebungssystem ferner einen Strahlteiler (14) umfasst, der zum Trennen der Strahlung von der Probe (4) und der Strahlung von der Strahlungsquelle (1) ausgelegt ist.

3. Bildgebungssystem (30) nach Anspruch 2, das eine Translationsplattform (13) umfasst, die zum Bewegen der Probe entlang der optischen Achse des dritten optischen Systems ausgelegt ist.

4. Bildgebungssystem nach einem der vorhergehenden Ansprüche, wobei die Streuvorrichtung (8) ein Beugungsgitter (23) umfasst.

5. Bildgebungssystem nach einem der folgenden Ansprüche, wobei die Schmierkamera (11) und das Streusystem (8) zum gleichzeitigen Aufnehmen von Teilbildern mit mehr als 20 Kanälen unterschiedlicher Wellenlängen ausgelegt sind.

6. Bildgebungssystem nach einem der vorhergehenden Ansprüche, wobei die Strahlungsquelle (1) so mit dem Prozessor (12) verbunden ist, dass die Wiederholung der von der Strahlungsquelle emittierten Beleuchtung mit der Änderung der Transmissions-oder Reflexionsmaske des räumlichen Lichtmodulators (6) synchronisiert ist.

7. Bildgebungssystem nach einem der vorhergehenden Ansprüche, wobei der räumliche Lichtmodulator eine Matrix aus Mikrospiegeln ist, die eine binäre Reflexions-Intensitätsmaske bilden.

8. Bildgebungssystem nach dem vorhergehenden Anspruch, wobei der Prozessor so konfiguriert ist, dass die binären Reflexionsmasken der Mikrospiegelmatrix, die mit den zur Bildung des zeit- und wellenlängenaufgelösten Bildes der Probe kombinierten Teilbildern der Probe assoziiert sind, eine Hadamard-, Fourier- oder Wavelet-Basis bilden.

9. Bildgebungssystem nach dem vorhergehenden Anspruch, wobei der Prozessor zum Kombinieren der Teilbilder der Probe konfiguriert ist, um einen 4D-Würfel zu konstruieren, der ein zeit- und wellenlängenaufgelöstes Bild der Probe bildet, indem er einen Matching-Pursuit- oder Basis-Pursuit-Algorithmus implementiert.

10. Bildgebungssystem nach einem der vorhergehenden Ansprüche, wobei die Strahlungsquelle eine Impulsquelle ist.

11. Bildgebungssystem nach einem der vorhergehenden Ansprüche, wobei die Strahlungsquelle eine Laserquelle, z.B. eine Laserdiode ist.

12. Verfahren zum zeitaufgelösten hyperspektralen Abbilden einer Probe (3), das die folgenden Schritte umfasst:

a. Beleuchten der Probe mit einer Strahlungsquelle (1);
b. Abbilden der Probe mit einem ersten optischen System (5) auf einen räumlichen Lichtmodulator (6), der eine Transmissions- oder Reflexionsmaske P bildet;
c. Fokussieren der durch den räumlichen Lichtmodulator durchgelassenen oder reflektierten Strahlung mit Hilfe eines zweiten optischen Systems (7) auf eine Streuvorrichtung (8) und räumliches Trennen der verschiedenen Wellenlängen der von dem räumlichen Lichtmodulator durchgelassenen oder reflektierten Strahlung mit Hilfe der Streuvorrichtung;
d. Aufnehmen, mit Hilfe einer Schmierkamera, die so ausgelegt ist, dass sie von der Strahlung (9) aus der Streuvorrichtung beleuchtet wird, eines zeit- und wellenlängenaufgelösten Teilbildes $S=P.I$ der Probe, die mit einer Transmissions- oder Reflexionsmaske $P$ assoziiert ist;
e. Wiederholen der Schritte a) bis c) durch Variieren der binären Transmissions- oder Reflexionsmaske *P* des räumlichen Lichtmodulators mit Hilfe eines Prozessors (12), der mit dem räumlichen Lichtmodulator verbunden ist, um mit der Schmierkamera eine Mehrzahl von mit den jeweiligen Transmissions- oder Reflexionsmasken *P* assoziierten zeitaufgelösten Teilbildern der Probe aufzunehmen;

f. Kombinieren der zeitaufgelösten Teilbilder der jeweiligen Probe mit Hilfe eines mit der Schmierkamera verbundenen Prozessors, um einen 4D-Würfel **I**<sub>tot</sub> zu konstruieren, der ein zeit- und wellenlängenaufgelöstes Bild der Probe bildet.

**Claims**

1. Time-resolved hyper-spectral imaging system (10, 30) for imaging a sample (3), comprising: a radiation source suitable for illuminating the sample repeatedly, a spatial light modulator (6) forming a transmission or reflection mask *P*, a first optical system (5) configured to form an image *I* of the sample on a spatial light modulator (6), a processor (12) connected to the spatial light modulator and configured to make the transmission or reflection mask *P* vary for each repetition of the illumination, a second optical system (7) suitable for focusing the radiation transmitted or reflected by the spatial light modulator so as to form, in its image focal plane, a partial image $S=P.I;$

   a dispersive device (8) comprising a slit placed in the image focal plane of the second optical system, said dispersive device being suitable for spatially splitting the various wavelengths of the radiation transmitted or reflected by the spatial light modulator;
   said imaging system being **characterised in that** it comprises:
   a streak camera arranged so as to be illuminated by the radiation issuing from the dispersive device (9) and configured to acquire a plurality of partial images resolved in time and in wavelength of the sample, said images being associated with respective and different transmission or reflection masks *P,* said streak camera being connected to the processor (12) and said processor also being configured to combine said partial images of the sample so as to construct a 4D image cube **I**<sub>tot</sub> forming an image resolved in time and in wavelength of the sample.

2. Imaging system (30) according to the preceding claim, comprising a third optical system (13) suitable for focusing the radiation (2) coming from the radiation source onto the sample and for collecting the radiation issuing from the sample (4), said imaging system further comprising a beamsplitter (14) arranged so as to split the radiation coming from the sample (4) and the radiation coming from the radiation source (1)

3. Imaging system (30) according to claim 2, comprising a translation platform (13) suitable for moving the sample along the optical axis of the third optical system.

4. Imaging system according to any one of the preceding claims, wherein the dispersive device (8) comprises a diffraction grating (23).

5. Imaging system according to any one of the preceding claims, wherein the streak camera (11) and the dispersive system (8) are suitable for simultaneously acquiring partial images with more than 20 channels of different wavelength.

6. Imaging system according to any one of the preceding claims, wherein the radiation source (1) is connected to the processor (12) so that the repetition of the illumination emitted by the radiation source is synchronised with the change of the transmission or reflection mask of the spatial light modulator (6).

7. Imaging system according to any one of the preceding claims, wherein the spatial light modulator is a micromirror array, forming a binary reflective intensity mask.

8. Imaging system according to the preceding claim, wherein the processor is configured so that the binary reflection masks of the micromirror array that are associated with the partial images of the sample that are combined to form the image resolved in time and in wavelength of the sample form a Hadamard, Fourier or wavelet basis.

9. Imaging system according to the preceding claim, wherein the processor is configured to combine said partial images of the sample so as to construct a 4D cube forming an image resolved in time and in wavelength of the sample by implementing a matching-pursuit or basis-pursuit algorithm.

10. Imaging system according to any one of the preceding claims, wherein the radiation source is a pulsed source.

11. Imaging system according to any one of the preceding claims, wherein the radiation source is a laser source, for example a laser diode.

12. Time-resolved hyper-spectral imaging method for imaging a sample (3), comprising the following steps:

   a. illuminating the sample with a radiation source (1);

b. forming the image of the sample with a first optical system (5) on a spatial light modulator (6) forming a transmission or reflection mask $P$;

c. focusing the radiation transmitted or reflected by the spatial light modulator using a second optical system (7) onto a dispersive device (8), and spatially splitting the various wavelengths of the radiation transmitted or reflected by the spatial light modulator using said dispersive device;

d. acquiring, using a streak camera arranged so as to be illuminated by the radiation (9) issuing from the dispersive device, a partial image resolved in time and in wavelength $S=P.I$ of the sample, which image is associated with one transmission or reflection mask $P$;

e. repeating steps a) to c) while varying the binary transmission or reflection mask $P$ of the spatial light modulator using a processor (12) connected to the spatial light modulator, in order to acquire, with the streak camera, a plurality of time-resolved partial images of the sample, said images being associated with respective transmission or reflection masks $P$;

f. combining, using a processor connected to the streak camera, said time-resolved partial images of the respective sample so as to construct a 4D cube $I_{tot}$ forming an image resolved in time and in wavelength of the sample.

[Figure 1]

Figure 1

[Figure 2]

Figure 2

[Figure 3]

Figure 3

[Figure 4A]

Figure 4A

[Figure 4B]

Figure 4B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180224552 A1
- GB 2231958 A

**Littérature non-brevet citée dans la description**

- **LIANG, JINYANG et al.** Encrypted three-dimensional dynamic imaging using snapshot time-of-flight compressed ultrafast photography. *Scientific reports,* 2015, vol. 5, 15504
- **GAO, LIANG et al.** Single-shot compressed ultrafast photography at one hundred billion frames per second. *Nature,* 2014, vol. 516.7529, 74
- **ROUSSET, FLORIAN et al.** Time-resolved multispectral imaging based on an adaptive single-pixel camera. *Optics express,* 2018, vol. 26.8, 10550-10558
- **DUARTE, MARCO F. et al.** Single-pixel imaging via compressive sampling. *IEEE signal processing magazine,* 2008, vol. 25.2, 83-91
- **EDGAR, MATTHEW P. ; GRAHAM M. GIBSON ; MILES J. PADGETT.** Principles and prospects for single-pixel imaging. *Nature Photonics,* 2018, 1